# EUROPÄISCHE PATENTSCHRIFT

(11) **EP 1 586 845 B1**
(45) Veröffentlichungstag und Bekanntmachung des Hinweises auf die Patenterteilung: **30.04.2014**
(21) Anmeldenummer: 05006941.8
(22) Anmeldetag: 30.03.2005
(51) Int. Cl.: F28D 9/00, F28F 3/02, F28F 3/08, F28F 21/06, F02M 25/07, F02M 31/04, F02B 29/04

(54) **Abgaswärmetauscher**
Exhaust gas heat exchanger
Echangeur de chaleur pour un gas d'echappement

(30) Priorität: 15.04.2004 DE 102004018197
(43) Veröffentlichungstag der Anmeldung: 19.10.2005
(73) Patentinhaber: Modine Manufacturing Company, Racine, Wisconsin 53403-2552 (US)
(72) Erfinder: Brost, Viktor, Dipl.-Ing., 72631 Aichtal (DE); Wierse, Martin, Dr.-Ing., 72636 Frickenhausen (DE); Ruf, Christoph, Dipl.-Ing., 72555 Metzingen (DE)
(74) Vertreter: Wolter, Klaus-Dietrich

(56) Entgegenhaltungen:
- DE-A1- 10 061 949
- DE-A1- 19 902 504
- DE-C1- 19 858 293
- US-A1- 2004 003 916
- PATENT ABSTRACTS OF JAPAN Bd. 1998, Nr. 02, 30. Januar 1998 (1998-01-30) & JP 09 280118 A (ISUZU MOTORS LTD), 28. Oktober 1997 (1997-10-28)

## Beschreibung

Die Erfindung betrifft einen Abgaswärmetauscher für eine Abgasrückführungsanordnung, mit dem das zur nochmaligen Verbrennung in die Zylinder einer Brennkraftmaschine zurückzuführende Abgas mittels des Ansaugluftstromes der Brennkraftmaschine gekühlt wird, wobei der Abgaswärmetauscher mehrere Strömungswege für die Ansaugluft und mehrere Strömungswege für das Abgas aufweist, die in wärmeleitendem Kontakt zueinander in einem Stapel angeordnet und metallisch verbunden sind, und die von einem Gehäuse umgeben sind.

Abgaswärmetauscher in Abgasrückführungsanordnungen arbeiten überwiegend mit dem flüssigen Kühlmittel der Brennkraftmaschine.

Der Anmelderin ist aus der aus dem Jahr 1944 stammenden US 2 408 846 auch ein Abgaswärmetauscher in einer Abgasrückführungsanordnung bekannt, bei der als Kühlmittel Umgebungsluft verwendet wird, die um das außen mit Kühlrippen versehene Gehäuse des Abgaswärmetauschers strömt.

Eine andere Kühlvorrichtung ist aus der DE 199 30 416 A1 bekannt, bei der die Abgasrückführleitung durch den Ansaugtrakt der Brennkraftmaschine geführt wird, um das Abgas mit der Ansaugluft zu kühlen. Bei Kraftfahrzeugheizungen verwendet man oft Luft, die beim Wärmeaustausch mit den Abgasen erwärmt und anschließend zur Heizung der Kabine benutzt wird.

Der einleitend beschriebene Abgaswärmetauscher ist aus JP 09 280118A bekannt. Aus der US 2004/0003916A1 ist ein weiterer Abgaswärmetauscher bekannt, dessen Strömungswege mit den Wärmetausch befördernden Elementen ausgestattet sind. Auch dieser Abgaswärmetauscher besitzt ein Gehäuse, dessen Ausgestaltung jedoch nicht näher definiert wurde.

Die Aufgabe der Erfindung besteht darin, einen kostengünstigen Abgaswärmetauscher vorzuschlagen, der nicht mit der Kühlflüssigkeit der Brennkraftmaschine arbeitet, der aber, in ähnlicher Weise wie diese, die Abgasrückführung verbessern hilft, d. h. zur Senkung des Kraftstoffverbrauchs der Brennkraftmaschine und zur Reduzierung der Emissionen beitragen kann.

Die Lösung dieser Aufgabe wird erfindungsgemäß durch die Merkmale des Anspruchs 1 erreicht.

Sowohl der Strömungsweg für die Ansaugluft als auch der Strömungsweg für das Abgas wurden in mehrere Strömungswege aufgeteilt. Die Strömungswege sind in wärmeleitendem Kontakt zueinander angeordnet und metallisch verbunden, wobei die Strömungswege mit den Wärmeaustausch befördernden Elementen ausgestattet sind.

Die Verwendung der Ansaugluft als Kühlmittel besitzt Vorteile, die vor allem darin bestehen, dass solchen Betriebssituationen der Brennkraftmaschine, in denen keine Kühlung der Abgase erforderlich ist, leichter entsprochen werden kann. Eine einfache Luftklappe (Bypassventil), die nicht in den erfindungsgemäßen Abgaswärmetauscher integriert werden muss, reicht aus, um Ansaugluft durch den Abgaswärmetauscher zu schicken oder um denselben herum zu leiten. Die durch den Ansaugtrakt der Brennkraftmaschine strömende Ansaugluft weist eine relativ niedrige Temperatur auf. Die als Bypassventil arbeitende Luftklappe vermeidet deshalb die Funktionsprobleme, die bei integrierten Abgas - Bypassventilen wegen der extrem hohen Temperaturen bei anderen Abgaswärmetauschern auftreten. Diese Vorteile werden durch die erfindungsgemäße Ausbildung des Abgaswärmetauschers besonders wirksam. Auch das Vorsehen von in den Abgaswärmetauscher integrierten Bypasskanälen für das Abgas ist hier nicht unbedingt notwendig.

Die Strömungswege für das Abgas sind Flachrohre, die vorzugsweise aus zwei Halbschalen zusammengesetzt sind.

Die Flachrohre bzw. die Halbschalen weisen in ihren Breitseiten zwei Öffnungen auf, und sie sind so mit Abstand übereinander gestapelt, dass die miteinander verbundenen einen Öffnungen einen Eintrittskanal und die miteinander verbundenen anderen Öffnungen einen Austrittskanal bilden.

Die Strömungswege für die Ansaugluft sind in dem Abstand zwischen den einzelnen Flachrohren angeordnet.

Die den Wärmeaustausch befördernden Elemente in den Strömungswegen für die Ansaugluft sind vorzugsweise Wellrippen oder dergleichen, die den wärmeleitenden Kontakt mit den Strömungswegen für das Abgas herstellen.

Die metallischen Elemente des Abgaswärmetauschers sind mittels Löten verbunden.

Der Abgaswärmetauscher weist als wesentliches Merkmal eine Gehäusekappe aus Kunststoff auf, die den Stapel aus Flachrohren umfasst.

Die Gehäusekappe besitzt einen Eintritt und einen Austritt für die Ansaugluft.

Der Rand der Gehäusekappe ist mit einer metallischen Bodenplatte unter Zwischenfügung einer Dichtung mechanisch verbunden, um das Gehäuse zu komplettieren.

Die Bodenplatte besitzt eine Eintrittsöffnung und eine Austrittsöffnung für das Abgas, die mit dem Eintrittskanal bzw. mit dem Austrittskanal verbunden sind.

Die Bodenplatte ist so ausgebildet, dass die Wärmeleitung zum Rand des Gehäuses reduziert wird. Das wird durch die Verlängerung des Weges zum Rand der Bodenplatte erreicht. (Versickung)

Es scheint etwas Besonderes zu sein, dass bei einem Abgaswärmetauscher, bei dem gewöhnlich extrem hohe Temperaturen auftreten, eine Gehäusekappe aus Kunststoff eingesetzt werden kann. Dadurch wird u. a. das Gewicht des Abgaswärmetauschers gering gehalten.

Die Flachrohre sind wenigstens an dem zum Ansauglufteintritt in der Gehäusekappe hinweisenden Ende strömungsgünstig ausgebildet, beispielsweise abgeflacht, um den Druckverlust der Ansaugluft gering zu halten. Diese abgeflachte Form lässt sich bei der bevorzugten Ausbildung der Flachrohre aus Halbschalen besonders einfach herstellen.

Die den Wärmeaustausch verbessernden Elemente in den Strömungskanälen bzw. in den Flachrohren für das Abgas sind vorzugsweise Inneneinsätze. Aber auch in die Breitwände der Flachrohre eingeformte Sicken oder dergleichen können vorgesehen werden.

Andere weiterbildende Merkmale sind Gegenstand der Unteransprüche.

Die Erfindung wird nachfolgend in einem Ausführungsbeispiel beschrieben. Die Beschreibung enthält möglicherweise andere wesentliche Merkmale.

Die beiliegenden Figuren zeigen Folgendes:
Fig. 1 Vorderansicht des Abgaswärmetauschers ohne Gehäusekappe;
Fig. 2 Seitenansicht ohne Gehäusekappe;
Fig. 3 Schnitt A-A aus Fig. 1;
Fig. 4 Draufsicht ohne Gehäusekappe;
Fig. 5 Ansicht auf die Bodenplatte des Abgaswärmetauschers;
Fig. 6 Perspektivische Ansicht des Abgaswärmetauschers mit Gehäusekappe;
Fig. 8 Querschnittsform;

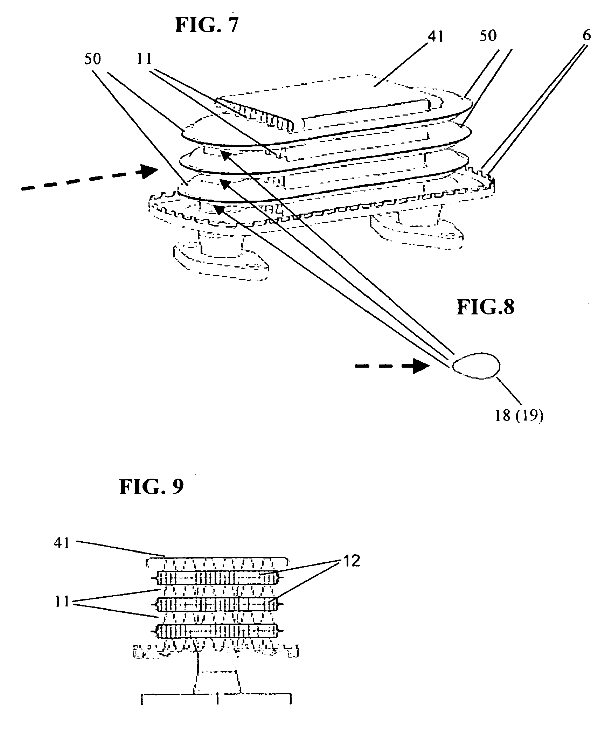

Die Fig. 7 und 9 zeigen eine geänderte Ausführung.

Die metallischen Einzelteile des Abgaswärmetauschers wie Wellrippen **13,** Flachrohre **4,** bzw. bevorzugt Flachrohr - Halbschalen **12.1, 12.2,** Inneneinsätze **60,** Bodenplatte **25** sowie Leitbleche **40, 41** werden vorzugsweise aus einem geeigneten Edelstahlblech hergestellt. Diese Teile werden bekanntlich mittels Umformwerkzeugen auf Umformmaschinen gefertigt. Die metallischen Teile werden, wie nachfolgend beschrieben, zusammengefügt und anschließend vorzugsweise in einem Lötprozess miteinander verbunden.

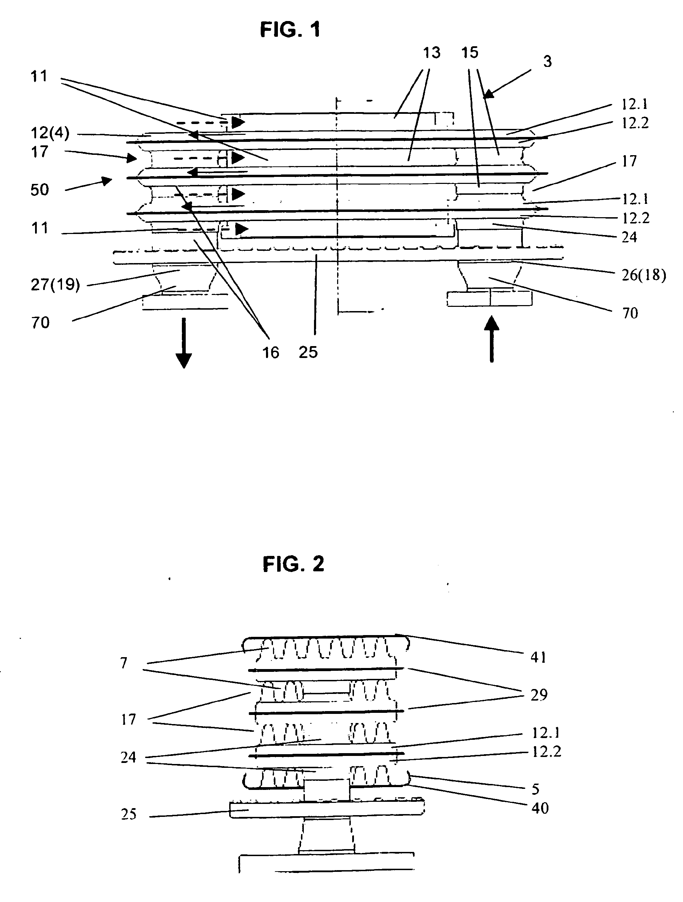

Die Flachrohr - Halbschalen **12.1, 12.2** besitzen einen Randabschnitt **29,** an dem jeweils zwei Halbschalen **12.1, 12.2** zu einem Flachrohr **4** verbunden werden, die die Strömungswege **12** darstellen. Im gezeigten Ausführungsbeispiel sind beide Halbschalen **12.1, 12.2** an beiden gegenüberliegenden Enden **50** abgeflacht, so dass eine strömungsgünstige Form geschaffen wird, die zu einem geringen Druckverlust auf der Seite der Ansaugluft führt, welche durch die Strömungswege **11** strömt. Ferner wurde im gezeigten Ausführungsbeispiel der Strömungsweg für die Ansaugluft auf vier Strömungswege **11** aufgeteilt und der Strömungsweg für das Abgas wurde auf drei Strömungswege **12** aufgeteilt. Das wird durch die in der Fig. 1 eingezeichneten gestrichelten (Ansaugluft) und durch die durchgezogenen Pfeile (Abgas) verdeutlicht. Selbstverständlich unterliegt die Anzahl der Strömungswege **11, 12** an und für sich keinen Beschränkungen, jedoch ist es im vorliegenden Fall wegen der räumlichen Verhältnisse günstiger, die Anzahl der Strömungswege **11, 12** gering zu halten und höheren Leistungsanforderungen beispielsweise durch längere Strömungswege **11, 12** und / oder durch veränderte Durchströmungsmuster zu entsprechen.

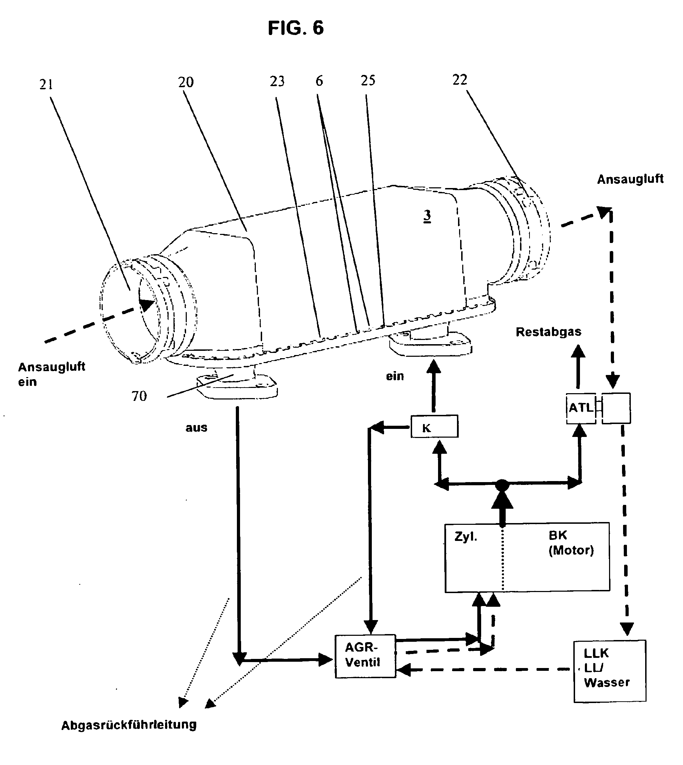

Die die Flachrohre **4** bildenden Halbschalen **12.1, 12.2** besitzen zwei Öffnungen **15, 16.** An dem Rand der Öffnungen **15, 16** ist ein Kragen **24** angeformt. Die Kragen **24** besitzen eine leicht konische Ausbildung. Die Kragen **24** benachbarter Flachrohre sind ineinander gesteckt, so dass ein Eintrittskanal **18** und ein Austrittskanal **19** für das Abgas geschaffen wird. In nicht gezeigten Ausführungen sind die Kragen **24** aneinander gefügt worden. Zum Abgaswärmetauscher gehört eine Bodenplatte **25.** In der Bodenplatte **25** befinden sich eine Eintrittsöffnung **26** und eine Austrittsöffnung **27,** die auf einer Linie mit dem Eintrittskanal **18** bzw. mit dem Austrittskanal **19** liegen. Die Eintrittsöffnung **26** und die Austrittsöffnung **27** besitzen jeweils einen entsprechenden Kragen **24,** die mit den Kragen **24** an den Öffnungen **15** und **16** des angrenzenden Flachrohrs vereinigt werden können. Auf derselben Linie liegt jeweils ein an der Bodenplatte **25** angebrachter Anschlussflansch **70,** zum Anschluss einer (in der Fig. 6) nur angedeuteten Abgasrückführleitung. Zwischen den Flachrohren verbleibt ein Abstand **17**, in dem die erwähnten Strömungswege **11** für die Ansaugluft ausgebildet sind. In den Strömungswegen **11** befinden sich Wellrippen **13** und in die Strömungswege **12** (Abgas) sind Inneneinsätze **60** eingelegt worden. Die Wellenlaufrichtung der Wellrippen **13** ist quer zur Strömungsrichtung der Ansaugluft vorgesehen, so dass die Ansaugluft durch die von den Wellrippen **13** gebildeten Kanäle **7** strömen muss. Wenigstens die außen liegenden Wellenflanken der Wellrippen **13** sind glatt und geschlossen ausgebildet. Die Hitzestrahlung auf das aus Kunststoff bestehende Gehäuse wird etwas reduziert.

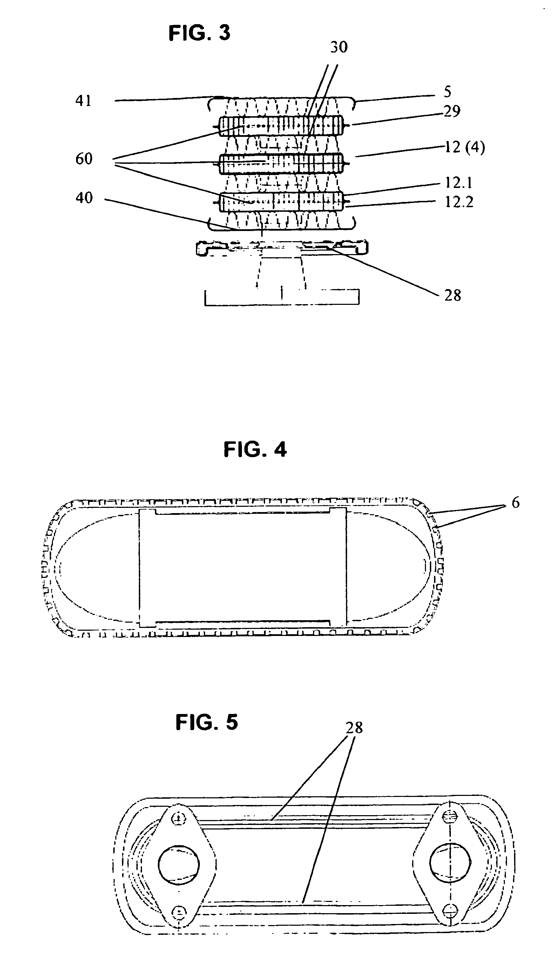

Ein in diesem Zusammenhang hervorzuhebendes Merkmal betrifft die Ausbildung des (in den Figuren) oberen und unteren Strömungsweges **11** für die Ansaugluft, welches besonders deutlich aus den Fig. 2 und 3 zu sehen ist. Die in diesen beiden Strömungswegen **11** angeordneten Wellrippen **13** besitzen jeweils ein an den Längskanten **5** abgebogenes Leitblech **40** bzw. **41.** Diese Leitbleche **40, 41** lenken einerseits die Ansaugluft durch die Wellrippen **13** und auf den angrenzenden Strömungsweg **12** und intensivieren somit dort den Wärmeaustausch. Andererseits tragen auch die Leitbleche **40, 41** zur Unterdrückung der Hitzestrahlung nach außen, in Richtung auf die aus Kunststoff bestehende Gehäusekappe **25** bei.

In der in den Fig. 7 und 9 gezeigten Ausführung wurde auf das untere Leitblech **40** verzichtet, denn die Wellrippe **13** wurde dort direkt mit der Bodenplatte **25** verbunden.

In der Bodenplatte **25** ist eine umlaufende Ausformung **28** (Fig. 3, 5, 9) vorgesehen, die die Steifigkeit der Bodenplatte **25** erhöht und auch die Wärmeleitung nach außen, in Richtung Gehäusekappe **20,** etwas unterdrücken soll.

Der die Gehäusekappe **20** aufweisende Abgaswärmetauscher wurde in der Fig. 6 dargestellt. Sie besitzt einen Ansauglufteinlass **21** und ein am anderen Ende angeordneten Auslass **22.** Die Gehäusekappe **20** wird nach dem Lötprozess aufgesetzt. Der Rand **23** der Gehäusekappe **20** ist mit dem Rand der Bodenplatte **25** mechanisch verbunden. Die Verbindung wird durch die Umformung von Vorsprüngen **6** am Rand der Bodenplatte **25** bewerkstelligt. Die umgebogenen Vorsprünge **6** liegen auf einem Absatz am Rand **23** der Gehäusekappe **20** auf und stellen die Verbindung sicher. (Fig. 4) Wenn nötig, wird man eine Dichtung in der Verbindung vorsehen.

In der Fig. 6 wurde lediglich ganz prinzipiell eine mögliche Ausbildung der Abgasrückführung angedeutet, die übrigens gut bekannter Stand der Technik ist. In ein solches oder auch in ein anders ausgestaltetes Abgasrückführungssystem ist der Abgaswärmetauscher **3** eingebunden. Die durch den Wärmeaustausch mit den Abgasen zusätzlich erwärmte Ansaugluft durchströmt anschließend einen Ladeluftkühler **LLK,** bevor sie als Verbrennungsluft, vermischt mit dem zurückgeführten Abgas, in die Zylinder der Brennkraftmaschine **BK** eingeführt wird. Der Querschnitt des vorne beschriebenen Eintrittskanals **18** und des Austrittskanals **19** für das Abgas soll möglichst so ausgebildet sein, dass der Druckverlust auf der Ansaugluftseite ein vertretbares Maß nicht übersteigt. Eine diesbezüglich günstige Tropfenform des Querschnitts wurde in der Fig. 8 schematisch gezeigt. Die Kanäle **18, 19** werden durch das Zusammenfügen der Kragen **24** an den Öffnungen **15, 16** geschaffen. (siehe vorne)

## Patentansprüche

1. Abgaswärmetauscher für eine Abgasrückführungsanordnung, mit dem das zur nochmaligen Verbrennung in die Zylinder einer Brennkraftmaschine (BK) zurückzuführende Abgas mittels des Ansaugluftstromes der Brennkraftmaschine gekühlt wird, wobei der Abgaswärmetauscher (3) mehrere Strömungswege (1, 11) für die Ansaugluft und mehrere Strömungswege (2, 12) für das Abgas aufweist, die in wärmeleitendem Kontakt zueinander in einem Stapel angeordnet und metallisch verbunden sind, und die von einem Gehäuse umgeben sind,
**dadurch gekennzeichnet, dass**
die Strömungswege (1, 2, 11, 12) mit den Wärmeaustausch befördernden Elementen (13) ausgestattet sind, wobei das Gehäuse als Gehäusekappe (20) aus Kunststoff ausgebildet ist, die den Stapel aus Strömungswegen (1, 2, 11, 12) umfasst und eine metallische Bodenplatte (25) besitzt.

2. Abgaswärmetauscher nach Anspruch 1, **dadurch gekennzeichnet, dass** die Strömungswege (12) für das Abgas Flachrohre (4) sind, die vorzugsweise aus zwei Halbschalen (12.1, 12.2) zusammengesetzt sind.

3. Abgaswärmetauscher nach den Ansprüchen 1 und 2, **dadurch gekennzeichnet, dass** die Flachrohre in ihren Breitseiten (30) zwei Öffnungen (15, 16) aufweisen und so mit Abstand (17) übereinander gestapelt sind, dass die miteinander verbundenen einen Öffnungen (15) einen Eintrittskanal (18) und die miteinander verbundenen anderen Öffnungen (16) einen Austrittskanal (19) bilden.

4. Abgaswärmetauscher nach Anspruch 1, **dadurch gekennzeichnet, dass** die Strömungswege (11) für die Ansauguft in den Abständen (17) zwischen den einzelnen Flachrohren angeordnet sind.

5. Abgaswärmetauscher nach Anspruch 3 und 4, **dadurch gekennzeichnet, dass** der Eintrittskanal (18) und der Austrittskanal (19) eine strömungsgünstige Form besitzen, um den Druckverlust auf der Ansaugluftseite gering zu halten.

6. Abgaswärmetauscher nach Anspruch 4, **dadurch gekennzeichnet, dass** die den Wärmeaustausch befördernden Elemente (13) in den Strömungswegen (11) für die Ansaugluft vorzugsweise Wellrippen oder dergleichen sind, die den wärmeleitenden Kontakt mit den Strömungskanälen (12) für das Abgas herstellen.

7. Abgaswärmetauscher nach einem der Ansprüche 1 - 6, **dadurch gekennzeichnet, dass** die metallischen Teile des Abgaswärmetauschers mittels Löten verbunden sind.

8. Abgaswärmetauscher nach Anspruch 1, **dadurch gekennzeichnet, dass** die Gehäusekappe (20) einen Eintritt (21) und einen Austritt (22) für die Ansaugluft aufweist.

9. Abgaswärmetauscher nach einem der vorstehenden Ansprüche, **dadurch gekennzeichnet, dass** der Rand (23) der Gehäusekappe (20) mit der Bodenplatte (25) mechanisch verbunden ist.

10. Abgaswärmetauscher, insbesondere nach Anspruch 9, **dadurch gekennzeichnet, dass** die Bodenplatte (25) eine Eintrittsöffnung (26) und eine Austrittsöffnung (27) für das Abgas aufweist, die mit dem Eintrittskanal (18) bzw. mit dem Austrittskanal (19) verbunden sind.

11. Abgaswärmetauscher nach Anspruch 9, oder 10, **dadurch gekennzeichnet, dass** die Bodenplatte (25) so ausgebildet ist, dass die Wärmeleitung zum Rand der Gehäusekappe (20) reduziert ist.

12. Abgaswärmetauscher nach Anspruch 11, **dadurch gekennzeichnet, dass** in der Bodenplatte (25) wenigstens eine in der Nähe des Randes umlaufende Ausformung (28) ausgebildet ist.

13. Abgaswärmetauscher nach einem der vorstehenden Ansprüche, **dadurch gekennzeichnet, dass** die Flachrohre wenigstens an dem zum Ansauglufteintritt (21) in der Gehäusekappe (20) hinweisenden Ende (50) strömungsgünstig ausgebildet, beispielsweise abgeflacht sind, um den Druckverlust der Ansaugluft gering zu halten.

14. Abgaswärmetauscher nach einem der vorstehenden Ansprüche, **dadurch gekennzeichnet, dass** die den Wärmeaustausch verbessernden Elemente (13) in den Strömungswegen (12) bzw. in den Flachrohren für das Abgas vorzugsweise Inneneinsätze (60) sind, aber auch in die Breitseiten (30) der Flachrohre eingeformte Sicken oder dergleichen sein können.

15. Abgaswärmetauscher nach einem der vorstehenden Ansprüche, **dadurch gekennzeichnet, dass** die der Gehäusekappe (20) und/oder der Bodenplatte (25) benachbarten Strömungswegen (11) für Ansaugluft vorgesehen und mit Leitblechen (40, 41) ausgestattet sind.

## Claims

1. Exhaust-gas heat exchanger for an exhaust-gas recirculation arrangement, by means of which exhaust-gas heat exchanger the exhaust gas to be recirculated into the cylinders of an internal combustion engine (BK) for renewed combustion is cooled by means of the intake air flow of the internal combustion engine, wherein the exhaust-gas heat exchanger (3) has multiple flow paths (1, 11) for the intake air and multiple flow paths (2, 12) for the exhaust gas, said flow paths being arranged in a stack, and metallically connected, so as to be in heat-conducting contact with one another and being surrounded by a housing,
**characterized in that**
the flow paths (1, 2, 11, 12) are equipped with elements (13) which promote the exchange of heat, wherein the housing is in the form of a housing cap (20) which is composed of plastic and which encompasses the stack of flow paths (1, 2, 11, 12) and which has a metallic base plate (25).

2. Exhaust-gas heat exchanger according to Claim 1, **characterized in that** the flow paths (12) for the exhaust gas are flat tubes (4) which are preferably assembled from two half-shells (12.1, 12.2).

3. Exhaust-gas heat exchanger according to Claims 1 and 2, **characterized in that** the flat tubes have two openings (15, 16) in their wide sides (30) and are stacked one on top of the other with a spacing (17) such that one set of interconnected openings (15) forms an inlet duct (18) and the other set of interconnected openings (16) forms an outlet duct (19).

4. Exhaust-gas heat exchanger according to Claim 1, **characterized in that** the flow paths (11) for the intake air are arranged in the spacings (17) between the individual flat tubes.

5. Exhaust-gas heat exchanger according to Claim 3 and 4, **characterized in that** the inlet duct (18) and the outlet duct (19) have a streamlined form in order to keep the pressure loss on the intake air side low.

6. Exhaust-gas heat exchanger according to Claim 4, **characterized in that** the elements (13), which promote the exchange of heat, in the flow paths (11) for the intake air are preferably corrugated fins or the like which produce the heat-conducting contact with the flow ducts (12) for the exhaust gas.

7. Exhaust-gas heat exchanger according to one of Claims 1 to 6, **characterized in that** the metallic parts of the exhaust-gas heat exchanger are connected by brazing.

8. Exhaust-gas heat exchanger according to Claim 1, **characterized in that** the housing cap (20) has an inlet (21) and an outlet (22) for the intake air.

9. Exhaust-gas heat exchanger according to one of the preceding claims, **characterized in that** the edge (23) of the housing cap (20) is mechanically connected to the base plate (25).

10. Exhaust-gas heat exchanger, in particular according to Claim 9, **characterized in that** the base plate (25) has an inlet opening (26) and an outlet opening (27) for the exhaust gas, said inlet opening and outlet opening being connected to the inlet duct (18) and to the outlet duct (19) respectively.

11. Exhaust-gas heat exchanger according to Claim 9 or 10, **characterized in that** the base plate (25) is designed such that the heat conduction to the edge of the housing cap (20) is reduced.

12. Exhaust-gas heat exchanger according to Claim 11, **characterized in that**, in the base plate (25), there is formed at least one moulded portion (28) which runs in an encircling manner in the vicinity of the edge.

13. Exhaust-gas heat exchanger according to one of the preceding claims, **characterized in that**, at least at the end (50) pointing toward the intake air inlet (21) in the housing cap (20), the flat tubes are of streamlined form, for example flattened, in order to keep the pressure loss of the intake air low.

14. Exhaust-gas heat exchanger according to one of the preceding claims, **characterized in that** the elements (13) that improve the exchange of heat in the flow paths (12) or in the flat tubes for the exhaust gas are preferably internal inserts (60), though may also be beads or the like formed into the wide sides (30) of the flat tubes.

15. Exhaust-gas heat exchanger according to one of the preceding claims, **characterized in that** the flow paths (11) which are adjacent to the housing cap (20) and/or the base plate (25) are provided for intake air and are equipped with guide lamellae (40, 41).

## Revendications

1. Echangeur de chaleur à gaz d'échappement pour un système de recirculation de gaz d'échappement avec lequel le gaz d'échappement devant être recirculé pour la combustion supplémentaire dans les cylindres d'un moteur à combustion interne (BK) est refroidi au moyen du flux d'air d'admission du moteur à combustion interne, l'échangeur de chaleur à gaz d'échappement (3) présentant plusieurs voies d'écoulement (1, 11) pour l'air d'admission et plusieurs voies d'écoulement (2, 12) pour le gaz d'échappement, lesquelles sont disposées en pile en contact thermoconducteur les unes avec les autres et sont connectées métalliquement, et sont entourées par un boîtier,
**caractérisé en ce que**
les voies d'écoulement (1, 2, 11, 12) sont munies d'éléments (13) favorisant l'échange thermique, le boîtier étant réalisé sous forme de coiffe de boîtier (20) en plastique qui entoure la pile de voies d'écoulement (1, 2, 11, 12) et possède une plaque de fond métallique (25).

2. Echangeur de chaleur à gaz d'échappement selon la revendication 1, **caractérisé en ce que** les voies d'écoulement (12) pour le gaz d'échappement sont des tubes plats (4) qui sont de préférence assemblés à partir de deux demi-coques (12.1, 12.2).

3. Echangeur de chaleur à gaz d'échappement selon les revendications 1 et 2, **caractérisé en ce que** les tubes plats présentent dans leurs côtés larges (30) deux ouvertures (15, 16) et sont empilés les uns sur les autres à intervalles (17) de telle sorte que certaines des ouvertures (15) connectées les unes aux autres forment un canal d'entrée (18) et les autres ouvertures (16) connectées les unes aux autres forment un canal de sortie (19).

4. Echangeur de chaleur à gaz d'échappement selon la revendication 1, **caractérisé en ce que** les voies d'écoulement (11) pour l'air d'admission sont disposées aux intervalles (17) entre les tubes plats individuels.

5. Echangeur de chaleur à gaz d'échappement selon les revendications 3 et 4, **caractérisé en ce que** le canal d'entrée (18) et le canal de sortie (19) possèdent une forme favorisant l'écoulement afin de maintenir faible la perte de pression du côté de l'air d'admission.

6. Echangeur de chaleur à gaz d'échappement selon la revendication 4, **caractérisé en ce que** les éléments (13) favorisant l'échange de chaleur dans les voies d'écoulement (11) pour l'air d'admission sont de préférence des ailettes ondulées ou similaires qui établissent le contact thermoconducteur avec les canaux d'écoulement (12) pour le gaz d'échappement.

7. Echangeur de chaleur à gaz d'échappement selon l'une quelconque des revendications 1 à 6, **caractérisé en ce que** les parties métalliques de l'échangeur de chaleur à gaz d'échappement sont connectées par brasage.

8. Echangeur de chaleur à gaz d'échappement selon la revendication 1, **caractérisé en ce que** la coiffe de boîtier (20) présente une entrée (21) et une sortie (22) pour l'air d'admission.

9. Echangeur de chaleur à gaz d'échappement selon l'une quelconque des revendications précédentes, **caractérisé en ce que** le bord (23) de la coiffe de boîtier (20) est connecté mécaniquement à la plaque de fond (25).

10. Echangeur de chaleur à gaz d'échappement, en particulier selon la revendication 9, **caractérisé en ce que** la plaque de fond (25) présente une ouverture d'entrée (26) et une ouverture de sortie (27) pour le gaz d'échappement, qui sont connectées au canal d'entrée (18) ou au canal de sortie (19).

11. Echangeur de chaleur à gaz d'échappement selon la revendication 9 ou 10, **caractérisé en ce que** la plaque de fond (25) est réalisée de telle sorte que la conduction thermique vers le bord de la coiffe de boîtier (20) soit réduite.

12. Echangeur de chaleur à gaz d'échappement selon la revendication 11, **caractérisé en ce qu'**au moins une formation périphérique à proximité du bord (28) est réalisée dans la plaque de fond (25).

13. Echangeur de chaleur à gaz d'échappement selon l'une quelconque des revendications précédentes, **caractérisé en ce que** les tubes plats sont réalisés de manière favorisant l'écoulement au moins à l'extrémité (50) tournée vers l'entrée d'air d'admission (21) dans la coiffe de boîtier (20), par exemple sont aplatis, afin de maintenir faible la perte de pression de l'air d'admission.

14. Echangeur de chaleur à gaz d'échappement selon l'une quelconque des revendications précédentes, **caractérisé en ce que** les éléments (13) améliorant l'échange thermique dans les voies d'écoulement (12) ou dans les tubes plats pour le gaz d'échappement sont de préférence des inserts intérieurs (60) mais peuvent aussi être des moulures ou similaires formées dans les côtés larges (30) des tubes plats.

15. Echangeur de chaleur à gaz d'échappement selon l'une quelconque des revendications précédentes, **caractérisé en ce que** les voies d'écoulement (11) adjacentes à la coiffe de boîtier (20) et/ou à la plaque de fond (25) sont prévues pour l'air d'admission et sont munies de tôles directrices (40, 41).
